(19) **Europäisches Patentamt / European Patent Office / Office européen des brevets**

(11) **EP 3 955 207 A1**

(12) **EUROPEAN PATENT APPLICATION**
published in accordance with Art. 153(4) EPC

(43) Date of publication:
**16.02.2022 Bulletin 2022/07**

(21) Application number: **20787243.3**

(22) Date of filing: **24.03.2020**

(51) International Patent Classification (IPC):
**G06T 7/00** (2017.01)

(52) Cooperative Patent Classification (CPC):
**G06T 7/00; G08G 1/00**

(86) International application number:
**PCT/JP2020/012874**

(87) International publication number:
**WO 2020/209046 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2019 JP 2019074628**

(71) Applicant: **Hitachi Astemo, Ltd.**
**Hitachinaka-shi, Ibaraki 312-8503 (JP)**

(72) Inventors:
• **HOTTA, Miyako**
**Tokyo 100-8280 (JP)**
• **USHIBA, Hiroyuki**
**Hitachinaka-shi, Ibaraki 312-8503 (JP)**

(74) Representative: **MERH-IP Matias Erny Reichl Hoffmann**
**Patentanwälte PartG mbB**
**Paul-Heyse-Strasse 29**
**80336 München (DE)**

(54) **OBJECT DETECTION DEVICE**

(57) Provided is an object detection device that can improve the accuracy of identifying a detection target even when the detection target is far away. A three-dimensional object candidate region extracting means 2 extracts, from an image, a three-dimensional object candidate region indicating a region in which an object is present, by grouping pixels according to parallax associated with the pixels or a distance corresponding thereto. A detection target candidate region enlarging means 3 calculates, from an actual size of the detection target (Height_Obj, Width_Obj) and a distance Z, an image size (height_k, width_k) indicating a size of the detection target (e.g., a bike) when the detection target is assumed to be present at the distance Z, and changes a size of the three-dimensional object candidate region to greater than or equal to the image size. A detection target identifying means 4 identifies whether an object within the three-dimensional object candidate region which has had its size changed is the detection target.

*FIG. 1*

EP 3 955 207 A1

**Description**

Technical Field

The present invention relates to an object detection device.

Background Art

In order to support the safety of automobiles and realize automatic driving, a function of identifying a specific object by an image sensor is required. For object identification, a method of determining whether or not there is a specific object in an image by using an identifier created by learning a large number of images of specific objects is generally used.
In order to perform object identification using an identifier, it is known to use a raster scan method of scanning the entire screen while changing the position and the size of the identifier, when it is not known where a target object is in the captured image. The raster scan method has a huge processing cost, and is not practical in an in-vehicle image sensor requiring real-time processing. Therefore, a method of extracting a region in which an object exists as a candidate region by a stereo camera and identifying the region is conventionally used.
A method of extracting a candidate region based on the disparity that can be acquired by a stereo camera is disclosed (see PTL 1, for example).
PTL 1 discloses the followings: "Disparity image information generation means, disparity histogram information generation means, and detection target-object image region specifying means are provided. The disparity image information generation means generates disparity image information on an imaged region. The disparity histogram information generation means generates disparity histogram information indicating frequency distribution of disparity values in each of column regions obtained by dividing the imaged image into a plurality of regions in a left-right direction, based on the disparity image information generated by the disparity image information generation means. The detection target-object image region specifying means selects image regions which are close to each other in the left-right direction of the imaged image, and have disparity values which are close to each other and have a frequency equal to or greater than a predetermined value, as candidate regions for a detection target-object image region in which a detection target object appears, based on the disparity histogram information generated by the disparity histogram information generation means, and specifies the detection target-object image region from the selected candidate regions in accordance with predetermined specifying conditions".

Citation List

Patent Literature

PTL 1: JP 2016-206801 A

Summary of Invention

Technical Problem

However, there are problems as follows. When an identification target object is located far away, the disparity value is small, and thus object identification is easily influenced by the measurement error, and it is not possible to accurately obtain the candidate region. In particular, when only a region smaller than the target-object region can be obtained as the candidate region, and the candidate region does not include the entirety of the detection target-object region, an identification process performed on the candidate region does not work well.
PTL 1 does not mention a countermeasure when the detection target is located far away.
An object of the present invention is to provide an object detection device capable of improving accuracy of identifying a detection target even when the detection target is located far away.

Solution to Problem

In order to achieve the above object, the present invention includes an extraction unit that extracts a candidate region indicating a region in which an object is present, from an image by performing grouping by a disparity associated with a pixel or a distance corresponding to the disparity, a change unit that calculates an actual size of a detection target and an image size indicating a size of the detection target on the image when the detection target is assumed to be at the distance, from the distance, and changes a size of the candidate region to be equal to or greater than the image size, and an identification unit that identifies whether the object in the candidate region having the changed size is the detection target.

Advantageous Effects of Invention

According to the present invention, it is possible to improve the accuracy of identifying a detection target even when the detection target is located far away. Objects, configurations, and advantageous effects other than those described above will be clarified by the descriptions of the following embodiments.

Brief Description of Drawings

[FIG. 1] FIG. 1 is a block diagram illustrating a configuration of an object detection device according to a first example of the present invention.
[FIG. 2] FIG. 2 is a view illustrating an example of an image captured by a stereo camera.
[FIG. 3] FIG. 3 is a view for explaining a process of three-dimensional object candidate region extracting means.
[FIG. 4] FIG. 4 is a view illustrating an example in which a three-dimensional object candidate region extraction process is executed on a motorcycle located far away.
[FIG. 5] FIG. 5 is a diagram for explaining a process flow of the three-dimensional object candidate region extracting means.
[FIG. 6] FIG. 6 is a diagram illustrating a disparity image of an input for extracting a three-dimensional object candidate.
[FIG. 7] FIG. 7 is a diagram illustrating an example of a three-dimensional object candidate region extracted by the process of the three-dimensional object candidate region extracting means.
[FIG. 8] FIG. 8 is a diagram illustrating a process flow of detection target candidate region enlarging means.
[FIG. 9] FIG. 9 is a diagram illustrating an example of a result obtained by enlarging the three-dimensional object candidate region extracted by the three-dimensional object candidate extracting means, by the detection target candidate region enlarging means.
[FIG. 10] FIG. 10 is a diagram illustrating an example of a detection target candidate region before and after the region is enlarged by the detection target candidate region enlarging means.
[FIG. 11] FIG. 11 is a diagram illustrating a process flow of detection target candidate region enlarging means in an object detection device according to a second example of the present invention.
[FIG. 12] FIG. 12 is a diagram for explaining a detection target candidate region enlarging method for the object detection device according to the second example of the present invention.
[FIG. 13] FIG. 13 is an example of a hardware configuration diagram of the object detection device.

Description of Embodiments

Hereinafter, an embodiment of the present invention will be described with reference to the drawings and the like. The following description shows specific examples of the contents of the present invention, and the present invention is not limited to these descriptions. Various changes and modifications can be made by those skilled in the art within the scope of the technical idea disclosed in this specification. In all the drawings for describing the present invention, components having the same function are denoted by the same reference signs, and the repetitive description thereof may be omitted.

(First Example)

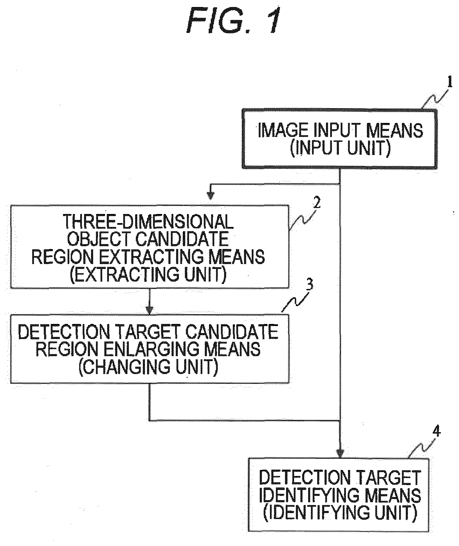

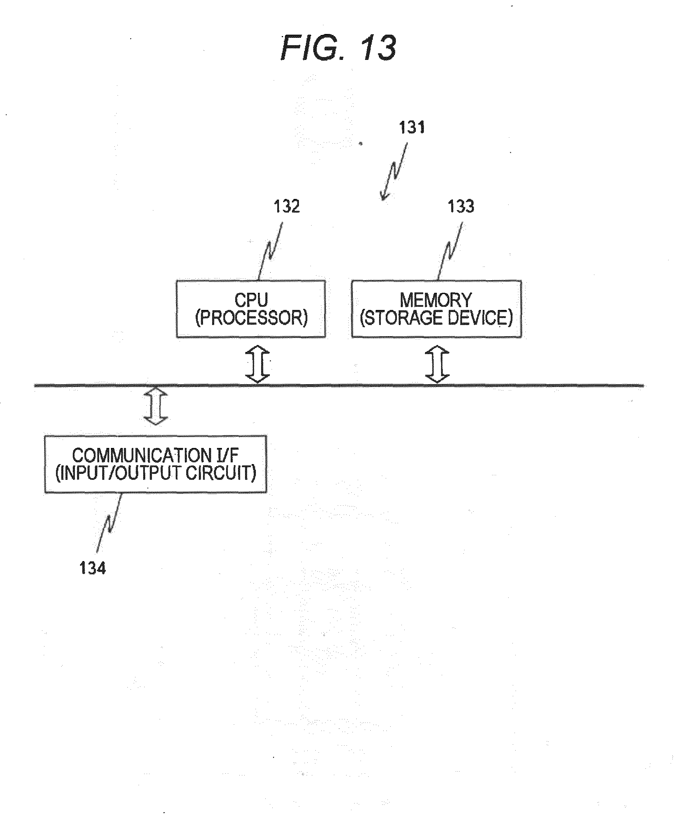

FIG. 1 is a block diagram illustrating a configuration of an object detection device according to a first example of the present invention. The object detection device is a device that detects a specific object (for example, a motorcycle or a pedestrian) from an image captured by a stereo camera (camera).
The object detection device in FIG. 1 includes image inputting means 1 for inputting an image acquired from a camera, three-dimensional object candidate region extracting means 2 in the image input by the image inputting means 1, detection target candidate region enlarging means 3 for enlarging a region to a size covering the size of the detection target from distance information of the extracted three-dimensional object candidate region, and detection target identifying means 4 for identifying whether or not a specific target is in the region determined by the detection target candidate region enlarging means 3.
As illustrated in FIG. 13, the object detection device is, for example, a microcomputer 131, and includes a processor such as a central processing unit (CPU) 132, a storage device such as a memory 133, and an input/output circuit such as a communication I/F 134. In the present example, the CPU 132 executes a program stored in the memory 133 to function as the three-dimensional object candidate region extracting means 2, the detection target candidate region enlarging means 3, and the detection target identifying means 4. In addition, the CPU 132 functions as the image inputting means 1 by receiving an image from the stereo camera via the communication I/F 134.

In other words, the three-dimensional object candidate region extracting means 2 (extraction unit), the detection target candidate region enlarging means 3, and the detection target identifying means 4 (identification unit) are configured by the CPU (processor) 132. Here, a pixel and the disparity or the distance corresponding to the disparity are stored in the memory 133 in association with each other (disparity image or distance image). Thus, various functions can be realized by software using the CPU (processor) 132.

Next, components of the first example will be sequentially described.

The image inputting means 1 is means for acquiring an image from a camera installed in front of a vehicle.

The three-dimensional object candidate region extracting means 2 is means for extracting a candidate region in which a three-dimensional object is present in the image input from the image inputting means 1.

A process of the three-dimensional object candidate region extracting means 2 will be specifically described. There are various methods for realizing the three-dimensional object candidate region extracting means 2. In the present example, an example of extracting a three-dimensional object candidate region by using a stereo camera will be described.

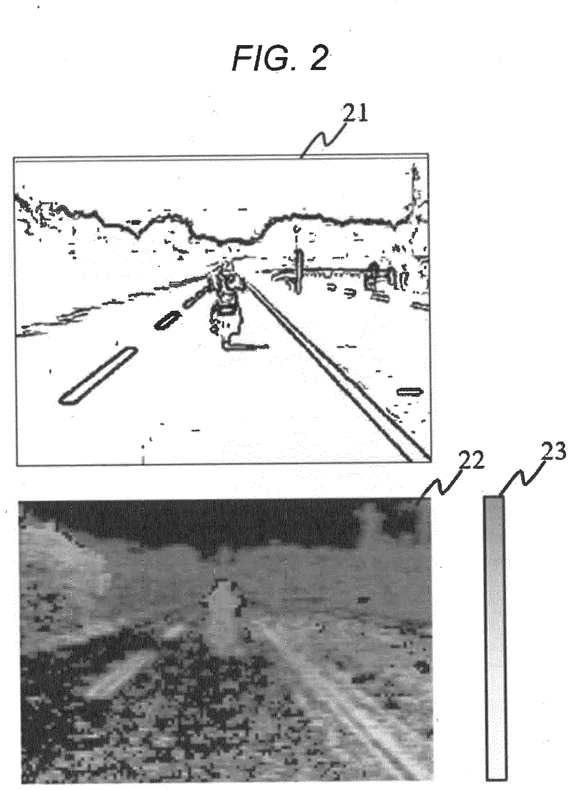

A stereo camera is a device that has two left and right cameras and measures a distance to a subject using the disparity. The image inputting means inputs two types of images which are images captured by the two left and right cameras of the stereo camera 1, and a disparity image or a distance image obtained from a plurality of images. FIG. 2 illustrates an example of the image captured by the stereo camera.

In FIG. 2, the reference signs 21 and 22 indicate images captured by the stereo camera at the same time. The reference sign 21 indicates an original image (set to an "image" below) captured by the camera, and the reference sign 22 indicates a disparity image calculated from the original images captured by the left and right cameras using the stereo matching process. A color of shading in a disparity image represents a disparity value of each pixel in the image. As illustrated in the chart of 23, the magnitude of the disparity value is indicated by shading.

The three-dimensional object candidate region extracting means 2 extracts a three-dimensional object candidate region by grouping regions having a constant disparity value from the disparity (distance) image indicated by the reference sign 22. As specific extracting means, for example, there is known means for creating a histogram with a disparity value for each of strip-shaped columns obtained by dividing a disparity image by a constant width, and extracting a three-dimensional object candidate region by grouping pixels having values close to the disparity value in vertical and horizontal directions on a screen, on the assumption that a three-dimensional object (a living object including a person or an object) is at a position of the disparity having a peak value.

That is, the three-dimensional object candidate region extracting means 2 (extraction unit) extracts the three-dimensional object candidate region (candidate region) indicating the region in which the object exists from the image by performing grouping by the disparity associated with the pixel or the distance corresponding to the disparity.

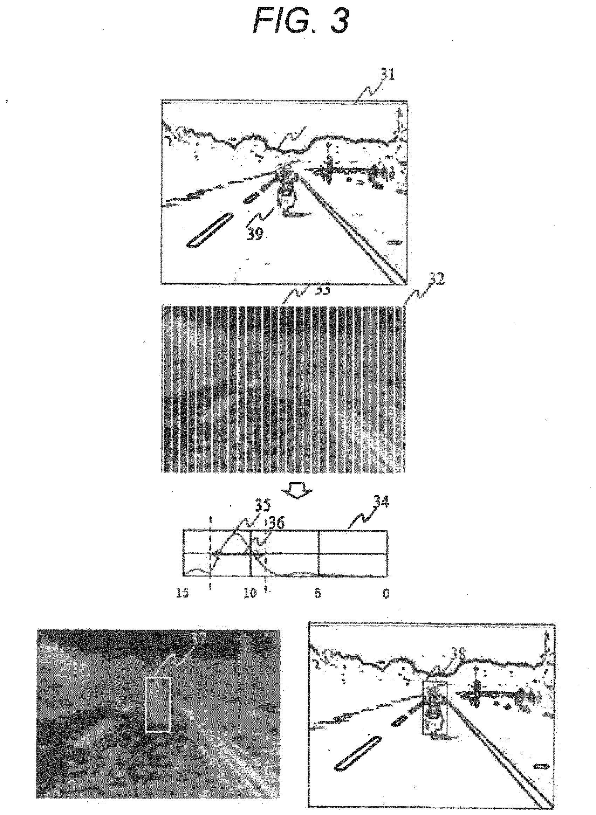

FIG. 3 schematically illustrates the process flow of the present means. A motorcycle is taken as an example of the detection target. In FIG. 3, the reference sign 31 indicates an image input from the stereo camera, and the reference sign 39 indicates a motorcycle. The reference sign 32 indicates a disparity image in which a disparity value is represented by shades for each pixel. The disparity image is divided into columns having a constant width in a strip shape as indicated by the reference sign 33. For each column, the disparity value of the pixel included in the column is projected on a histogram in which the horizontal axis indicates the disparity.

An example' of the disparity histogram is indicated by the reference sign 34. When there is a three-dimensional object in the column, a peak as indicated by the reference sign 35 appears at a specific disparity value. In order to also consider an error in obtaining the disparity, a threshold value proportional to each magnitude of the disparity value is set, and pixels having a value in a disparity range of a section 36, which is provided within the threshold value are grouped in the column and in the adjacent left and right columns. A result of the grouping is indicated by the reference sign 37 on the disparity image 32. A region subjected to the grouping in the same manner is indicated by the reference sign 38 on the input image 31. The regions indicated by the reference signs 37 and 38 are regions extracted as the three-dimensional object candidate regions.

<Extraction of Three-dimensional Object Candidate Region>

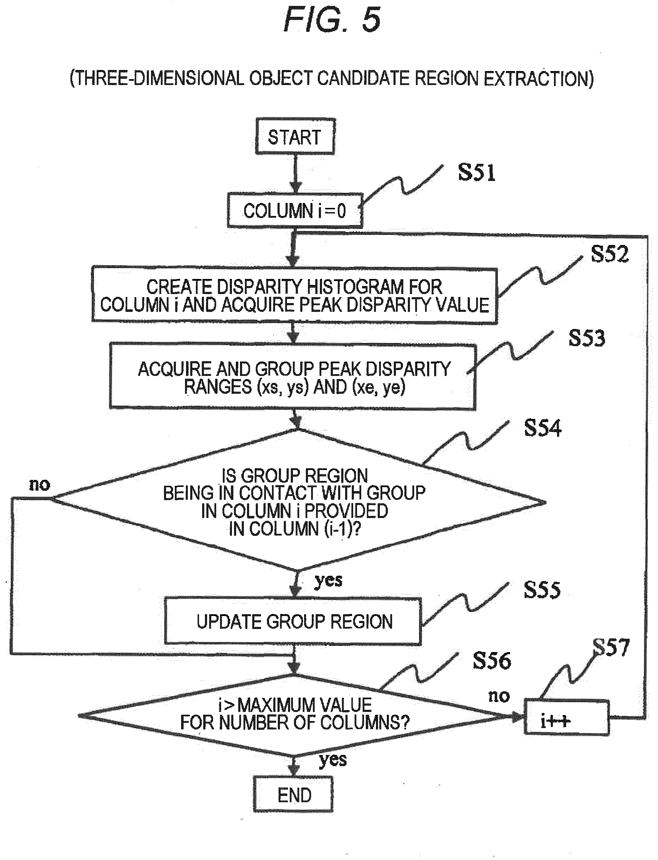

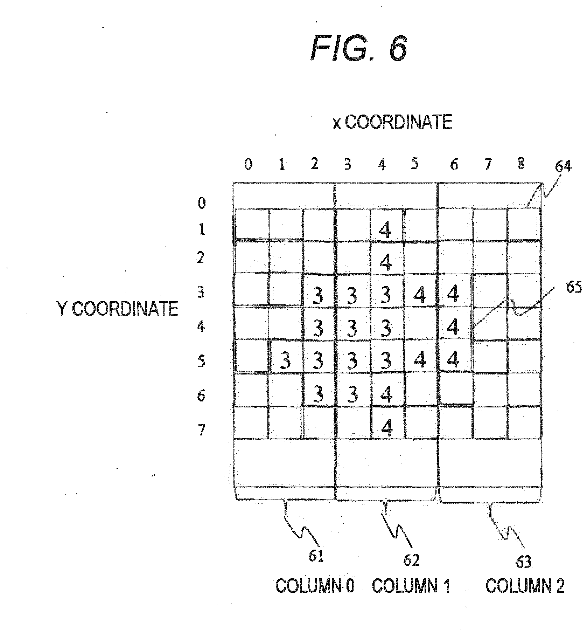

The detailed process of the three-dimensional object candidate region extracting means 2 will be described with reference to FIGS. 5 and 6. FIG. 5 illustrates a process flow of the three-dimensional object candidate region extracting means 2 (CPU 132). FIG. 6 is a disparity image of an input for extracting a three-dimensional object candidate.

In S51 in FIG. 5, the CPU 132 clears a counter referring to the column indicated by the reference sign 33 in FIG. 3 to 0.

In S52, the CPU 132 creates a disparity histogram from the distribution of the disparity of the column i.

S53 is a process of acquiring peak disparity values from the disparity histogram created in Step S52, extracting regions of pixels having the peak disparity values from the column, and grouping the regions. The regions having the peak disparity values are grouped as rectangles. Here, (xs, ys) and (xe, ye) are coordinates of a start point and an end point of a rectangle, respectively. A line segment connecting the start point and the end point is a diagonal line of a rectangle.

In S54, the CPU 132 refers to the adjacent column i -1 on which the processing has been performed, and determines whether or not there is a group region in contact with the group created in the column i. If yes, the process proceeds to the process of S55. If no, the process proceeds to the process of S56.

In S55, the CPU 132 integrates the divided group regions of the column i and the column (i-1) in an update process of the group region.

In S56, the CPU 132 determines whether the reference counter i of the column is greater than the maximum value in the column. When the reference counter i is not greater than the maximum value, the process proceeds to S57. When the reference counter i is greater than the maximum value, it is determined that the process on all the columns have been completed, and the CPU 132 ends the process.

In S57, the CPU 132 increments the reference counter i of the column, and proceeds to the process for the next column.

The above description is the process flow of the three-dimensional object candidate region extracting means 2. Such a process flow will be specifically described using an example of a disparity image in FIG. 6. For simplicity, an example in which an image of nine pixels in an x (horizontal) direction and eight pixels in a y (vertical) direction is provided, and the image is divided into three columns each having a width of three pixels will be described.

The entire rectangle illustrated in FIG. 6 is an image region. The reference signs 61, 62, and 63 indicate strip-shaped columns corresponding to the reference sign 33 in FIG. 3. Squares illustrated as the reference signs 64 and 65 are pixels constituting an image. As indicated by the reference sign 65, the numerical values shown in the pixels are examples of disparity values. In the case of a blank as indicated by the reference sign 64, it is assumed that it is not possible to acquire the disparity due to a long distance or the like.

A specific example of a three-dimensional object candidate region extracting process will be described in accordance with the process flow in FIG. 5.

In the process of S51, the CPU 132 refers to a column 61 corresponding to the column 0 in FIG. 6.

In the process of S52, the CPU 132 creates a disparity histogram of the column 61 and acquires the mode as the peak disparity. In the case of the column 61, the peak disparity value is 3, which is the mode.

In the process of S53, the CPU 132 acquires and groups peak disparity ranges. In the case of the column 61, a rectangular region in a range where the peak disparity value exists is (x start point coordinates, y start point coordinates)(x end point coordinate, y end point coordinate) = (1, 3) (2, 6).

Since the column 61 is a start column, the determination in S54 is skipped.

In the determination in S56, since the column 61 is not the column maximum value, the CPU 132 proceeds to S57 and sets the column reference counter to 1.

In the process of S52, the CPU 132 creates a disparity histogram of the column 62 and acquires the mode as the peak disparity. In the case of the column 62, the peak disparity value is 3, which is the mode.

In the process of S53, the CPU 132 acquires and groups peak disparity ranges. In the case of the column 62, a rectangular region in a range where the peak disparity value exists is (x start point coordinates, y start point coordinates) (x end point coordinate, y end point coordinate) = (3, 3) (4, 6).

In the determination in S54, the CPU 132 determines whether or not there is a group region that is in contact with the group of the column i, in the column (i-1). When the groups in the column 62 and the column 61 are compared with each other, the regions of (1, 3) (2, 6) and (3, 3) (4, 6) are in contact with each other. Thus, the process proceeds to the process of S55.

In the process of S55, the CPU 132 updates the group region. When it is determined that the group regions are in contact with each other in the determination of S54, the group regions of the columns are integrated. In this example, the integrated group region is (1, 3)(4, 6).

In the determination in S56, since the column 62 is not the column maximum value, the CPU 132 proceeds to S57 and sets the column reference counter to 2.

In the determination of S52, the CPU 132 creates a disparity histogram of the column 63 and acquires the mode as the peak disparity. In the case of the column 63, the peak disparity value is 4, which is the mode.

In the process of S53, the CPU 132 acquires and groups peak disparity ranges. In the case of the column 61, a rectangular region in a range where the peak disparity value exists is (x start point coordinates, y start point coordinates)(x end point coordinate, y end point coordinate) = (6, 3) (6, 5).

In the determination in S54, the CPU 132 determines whether or not there is a group region that is in contact with the group of the column i, in the column (i-1). When the groups in the column 63 and the column 62 are compared with each other, the regions of (1, 3)(4, 6) and (6, 3)(6, 5) are in contact with each other. Thus, the process proceeds to the process of S56.

In the determination of S56, since the column 62 is the column maximum value, the CPU 132 ends this process.

The group created during the above process is the three-dimensional object candidate region.

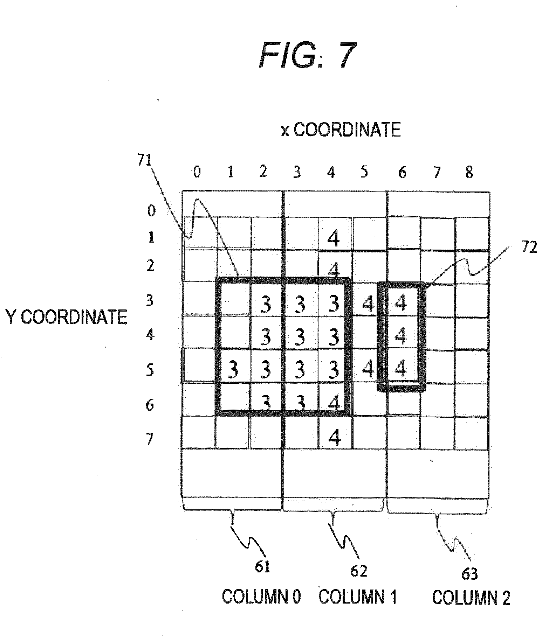

The three-dimensional object candidate regions extracted by the process of the three-dimensional object candidate region extracting means 2 are indicated by regions surrounded by thick rectangles 71 and 72 in FIG. 7. Although the peak disparity value is set to a single value for the simplicity, a range that having values ((the peak disparity value + 1) and (the peak disparity value -1)) before and after the peak and includes, for example, peaks of 2 to 4 may be set as the peak disparity value.

The above description is an example of means for realizing the three-dimensional object candidate region extracting means 2. The region extracted by the three-dimensional object candidate region extracting means 2 is a region where the detection target identifying means 4 determines whether the region is an object that seems to be a detection target (an object in which a degree of similarity to the detection target is equal to or greater than a predetermined value). Thus, such a region needs to cover the entire region of the three-dimensional object as indicated by the reference signs 37 and 38 in FIG. 3.

<Enlargement of Detection Target Candidate Region>

Next, the detection target candidate region enlarging means 3 will be described. The detection target candidate region enlarging means 3 is a process of enlarging the three-dimensional object candidate region extracted by the three-dimensional object candidate region extracting means 2 to a size corresponding to the detection target object, by using a distance that can be calculated from the disparity of the region.

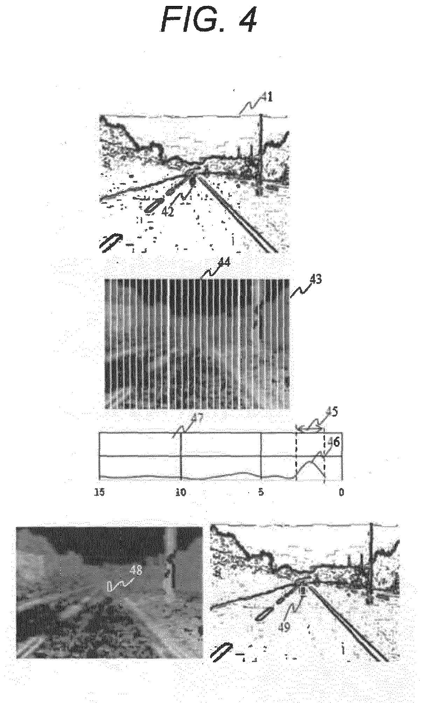

The process of the detection target candidate region enlarging means 3 will be described with reference to FIG. 4.

FIG. 4 illustrates an example in which the similar process is executed on a motorcycle located far away as in FIG. 3. The reference sign 41 indicates an input image, and the reference sign 42 in the image indicates a motorcycle. The reference sign 43 indicates a disparity image calculated from the input image 41. Similar to the example in FIG. 3, a disparity histogram as indicated by the reference sign 47 is created for each strip-shaped column 44. A region obtained by grouping pixels having a disparity value range of a threshold value section 45 after a disparity peak 46 and the section 45 are set is indicated by a rectangle 48 on the disparity image 43. Similarly, a grouping region is illustrated on the input image 41.

Comparing the example of FIG. 3 with the example of FIG. 4, in FIG. 3, the motorcycle as the detection target is located at a short distance. Thus, the absolute value of the disparity in the detection target-object region (disparity peak) is large as indicated by the disparity histogram 34. In FIG. 4, the motorcycle as the detection target is located at a long distance, and thus the absolute value of the disparity in the detection target-object region (disparity peak) is small as indicated by the disparity histogram 47. When the absolute value of the disparity is large in the vicinity as in FIG. 3, the value of the measurement error with respect to the absolute value of the disparity is small. Thus, it is possible to detect the entire three-dimensional object region as indicated by the reference sign 38 in FIG. 3, by determining the grouping range with a constant threshold value.

On the other hand, when the absolute value of the disparity is small at a long distance, the ratio of the measurement error to the absolute value of the disparity is high. Thus, when the grouping range is determined with a constant threshold value with respect to the disparity frequency peak, the grouping range may not include the entire three-dimensional object as indicated by the reference sign 49.

The detection target candidate region enlarging means 3 is means for enlarging the region to cover the entire region of the three-dimensional object when the absolute value of the disparity is small and the accuracy is low at such a distance, as described above.

This process is executed as follows. Sequentially referring to a plurality of three-dimensional object candidate regions (groups) extracted by the three-dimensional object candidate region extracting means 2, the height and width of the detection target, which are estimated from the disparity of each group, are compared to the actual height and width of the group. When the height or width of the group is smaller than the estimated values, the grouped region is enlarged by changing the threshold value of the disparity values to be grouped, and the region is enlarged to be equal to or larger than the estimated region.

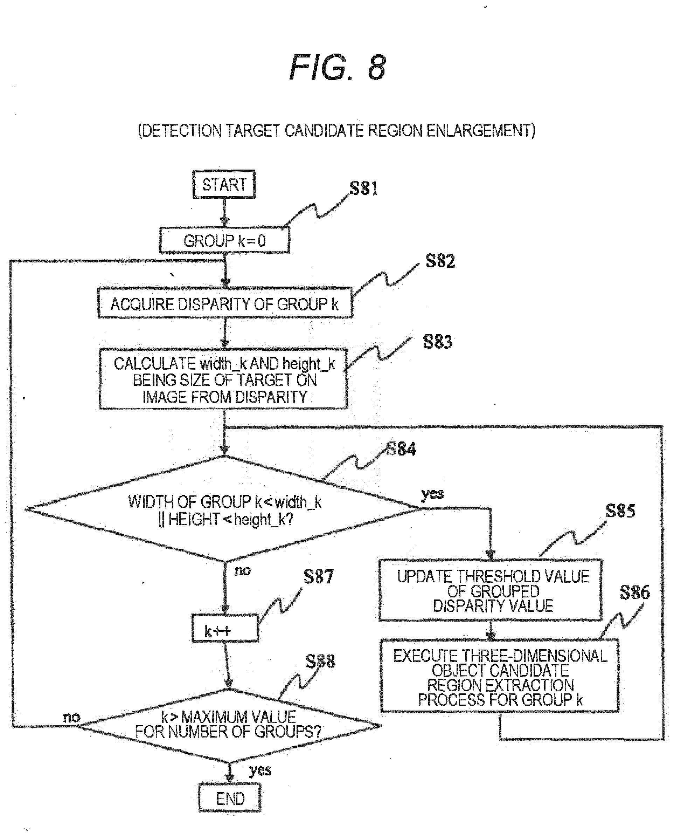

A process flow of the detection target candidate region enlarging means 3 (CPU 132) will be described with reference to FIG. 8.

In S81, the CPU 132 clears a reference counter k to 0. The counter k is used for sequentially referring to the plurality of three-dimensional object candidates (groups) created by the three-dimensional object candidate region extracting means 2.

In S82, the CPU 132 acquires the disparity value of the group k. In the case of a region including a plurality of disparities, a representative value of the disparity value is acquired by a method such as taking an average value or taking a maximum value.

In S83, the CPU 132 calculates the height height_k and the width width_k, which are the estimated size of a target object on the image, from the disparity acquired in S82.

Here, the actual height (for example, 160 cm) and the actual width (for example, 100 cm) of the target object (for example, a motorcycle) are assumed in advance, and the size on the image when the object is at a position of a distance obtained from the disparity is calculated. The calculation expressions of height_k (pixel) and width_k (pixel) are obtained by the following expressions using camera parameters.

$$\text{height\_k} = (\text{Height\_Obj} * f)/(Z \times w) \ldots (1)$$

$$\text{width\_k} = (\text{Width\_Obj} * f)/(Z \times w) \ldots (2)$$

where,

Height_Obj: assumed height (mm) of detection target
Width_Obj: assumed width (mm) of detection target
f: focal length (mm)
Z: distance (mm)
w: pixel pitch (mm)

In other words, the detection target candidate region enlarging means 3 (change unit) calculates the actual size (Height_Obj, Width_Obj) of the detection target and the image size (height_k, width_k) indicating the size of the detection target (for example, a motorcycle) on the image when the detection target (for example, a motorcycle) is assumed to be present at a distance Z, from the distance Z.

The assumed height (representative height) and width (representative width) of the detection target are set by the actual size of the object. Since the purpose is to enlarge the region including the object, when the detection target (for example, a pedestrian) has a variation in size due to age, individual difference, or the like, it is possible to obtain an appropriate effect by setting the maximum value.

In S84, the CPU 132 compares the actual width and height of the group k with width_k and height_k obtained in the process of S83, and determines whether or not the actual width is smaller than width_k or the actual height is smaller than height_k. When either the width or the height is smaller than the comparison value, the process proceeds to the process of S85. When both are greater, the process proceeds to the process of S87.

In S85, the CPU 132 changes the threshold value of the grouped disparity of the group k. With reference to the disparity values included in the group k, the threshold value of the disparity to be extracted as a group is expanded, and the allowable range of the disparity values to be grouped is widened.

In S86, the CPU 132 re-executes the process of the three-dimensional object candidate region extracting means 2 by using the threshold value expanded in S85. Because the disparity threshold value is changed, and the allowable range is widened, the grouping region is widened and updated. After the update, the process returns to S84, and the size of the group is determined.

In the case of no in S84, the process proceeds to S87.

In S87, the CPU 132 increments the counter k for the number of groups.

In S88, the CPU 132 determines whether k is greater than the maximum value of the number of groups. When k is not greater than the maximum value, the process proceeds to S82, and the process is executed on the next group. When k is greater than the maximum value, it is determined that the process for all the groups has ended, and the CPU 132 ends this process.

In this manner, the detection target candidate region enlarging means 3 (change unit) changes the size of the three-dimensional object candidate region (candidate region) to the image size (height_k, width_k) or larger.

In the present example, the detection target candidate region enlarging means 3 (change unit) widens the range of the disparity or the distance in the grouping until the size of the three-dimensional object candidate region (candidate region) is greater than the image size (height_k, width_k), and causes the three-dimensional object candidate region extracting means 2 (extraction unit) to re-extract the three-dimensional object candidate region. The detection target identifying means 4 (identification unit) identifies whether the object in the re-extracted three-dimensional object candidate region (candidate region) is the detection target (for example, a motorcycle).

Thus, the size of the three-dimensional object candidate region (candidate region) can be made equal to or larger than the image size by putting adjacent groups having substantially the equal distance together. As a result, it is possible to improve the accuracy of identifying the detection target while suppressing the process load.

The above description is the process of the detection target candidate region enlarging means 3. By repeating the processes from S84 to S86, a process of expanding the range of the disparity values to be grouped, widening the region, and widening the region until the disparity values are greater than width_k and height_k is executed.

Since the absolute value of the disparity is small at a long distance, the boundary between the error range of the disparity of the object and the disparity of the background is not clear. Therefore, a process of adjusting the disparity range to an appropriate disparity range by setting the region grouped by the peak disparity value as the start region and expanding the disparity range until reaching the size of the detection target is executed.

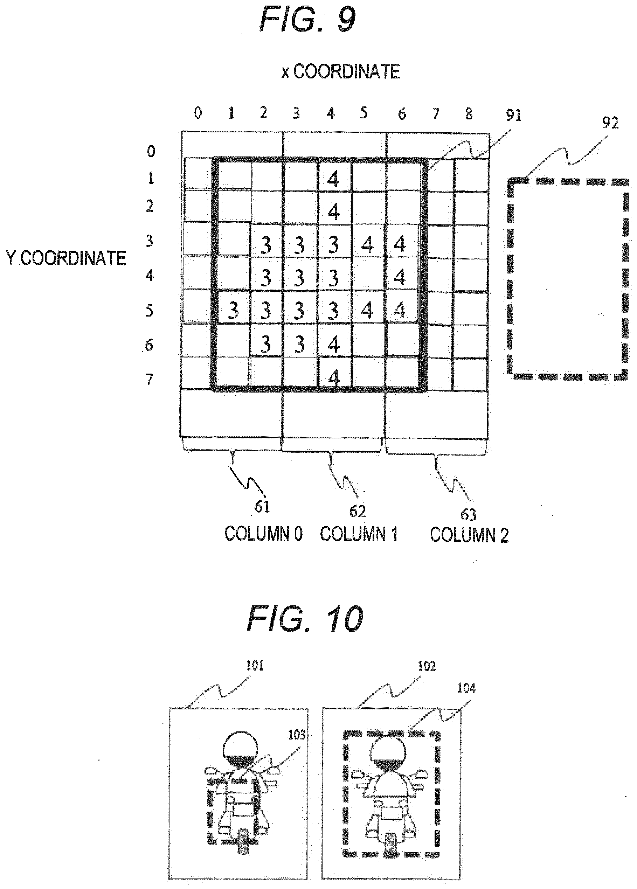

FIG. 9 illustrates a result obtained by enlarging the three-dimensional object candidate region extracted by the three-dimensional object candidate region extracting means 2 illustrated in FIG. 7 by the detection, target candidate region enlarging means 3. It can be seen that the regions divided into the group 71 and the group 72 in FIG. 7 are integrated into a group 91 and become a large group in FIG. 9.

FIG. 10 illustrates an example of the detection target candidate region before and after the region is enlarged by the detection target candidate region enlarging means 3. The reference sign 101 indicates an example before enlargement, and the reference sign 102 indicates an example after the enlargement. Before the enlargement, a detection target candidate region 103 does not cover the region of the detection target (the motorcycle and the driver), but, after the enlargement, a detection target candidate region 104 covers the region of the detection target.

As described above, with the process of the detection target candidate region enlarging means 3, even when the candidate region of the three-dimensional object does not include the entire detection target region, it is possible to appropriately enlarge the region to the size covering the detection target.

<Identification of Detection Target>

The detection target identifying means 4 is means for detecting whether or not a specific region is a detection target by pattern matching, a machine learning identifying instrument, or the like. In the present invention, the detection target identifying means performs an identification process on the region which has been extracted by the three-dimensional object candidate region extracting means 2 and enlarged by the detection target candidate region enlarging means 3. As described with reference to FIG. 10, when the absolute value of the disparity is small at a long distance and it is difficult to distinguish from the background, there is a case where a region as indicated by the reference sign 103 is extracted by grouping the disparity by the three-dimensional object candidate region extracting means 2. In this case, when the identification process is executed on the region 103, the feature for identifying the object is not included in the region in order not to include the entire detection target-object region. Thus, the identification process does not work well. On the other hand, as a result of the enlargement by the detection target candidate region enlarging means 3, the region is enlarged to the assumed size corresponding to the detection target. Thus, as indicated by the reference sign 104, the region can be enlarged to a size that covers the region of the detection target, and there is an effect that the identification process can be executed well.

In other words, the detection target identifying means 4 (identification unit) identifies whether the object in the three-dimensional object candidate region (candidate region) having the changed size is the detection target (for example, a motorcycle). Thus, the detection target is included in the three-dimensional object candidate region (candidate region), and thus it is possible to improve the accuracy of identifying the detection target.

The first embodiment of the object detection device according to the present invention has been described above. When it is not possible to extract well the entire region of an object at a long distant due to the grouping of the disparity, an effect that the detection target identifying means 4 in the subsequent stage can be executed well is obtained by the detection target candidate region enlarging means 3 enlarging the three-dimensional object candidate region (candidate region) to the size corresponding to the detection target object. In addition, the region is enlarged based on the distance that can be estimated from the disparity, and thus an effect that the process load is not increased without enlarging the region larger than necessary is obtained.

As described above, according to the present example, it is possible to improve the accuracy of identifying the detection target even when the detection target is located far away.

(Second Example)

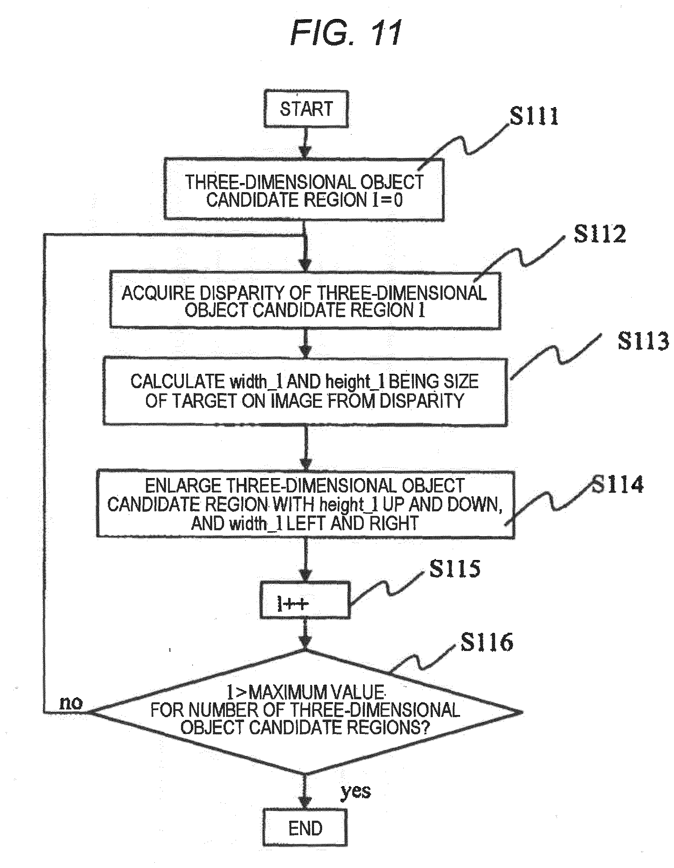

FIG. 11 is a diagram illustrating a process flow for explaining a second implementation form of the detection target candidate region enlarging means 3 in an object detection device according to a second example of the present invention. In the present example, there are a plurality of three-dimensional object candidate regions detected by the three-dimensional object candidate region extracting means 2 in the image, and each of the plurality of three-dimensional object candidate regions is sequentially processed.

In S111, the CPU 132 sets a reference counter 1 of the three-dimensional object candidate region to an initial value of 0.

In S112, the CPU 132 acquires the disparity (representative value) of a three-dimensional object candidate region 1.

In S113, the CPU 132 calculates the size width_l and height_l of α target object on the image from the disparity acquired in S112. This calculation method is the same as the process of S83 in FIG. 8, and the calculation is performed using Expressions (1) and (2).

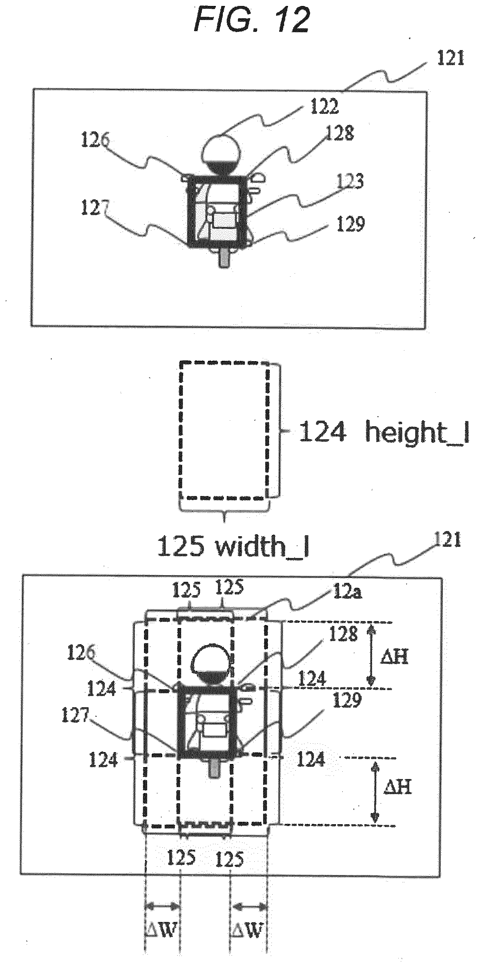

In S114, the CPU 132 enlarges the three-dimensional object candidate region with a region of height_l vertically and width_l horizontally by using the height_l and the width_l calculated in S113. An enlargement method will be described with reference to FIG. 12. A detection target (a motorcycle and a driver) 122 is present in an image 121 in FIG. 12, and the three-dimensional object candidate region extracting means. 2 detects a region 123 including vertexes 126, 127, 128, and 129. For this region, a result obtained by enlarging width 1 and height_l calculated in S113 up, down, left, and right from the vertexes 126, 127, 128, and 129 as a start point is a region 12a.

In other words, the detection target candidate region enlarging means 3 (change unit) changes the size of the three-dimensional object candidate region so that the horizontal width of the three-dimensional object candidate region is increased by a difference ΔW between the horizontal width width_l of the image size (width_l, height_1) and the horizontal width of the three-dimensional object candidate region (candidate region) in each of the positive direction and the negative direction of the horizontal axis of the image, and changes the size of the three-dimensional object candidate region so that the vertical width of the three-dimensional object candidate region is increased by a difference ΔH between the vertical width height_l of the image size (width_l, height_1) and the vertical width of the three-dimensional object candidate region (candidate region) in each of the positive direction and the negative direction of the vertical axis of the image.

Thus, even though there is no adjacent group having the substantially equal distance, it is possible to set the size of the three-dimensional object candidate region (candidate region) to be equal to or larger than the image size (width_l, height_l) calculated by Expressions (1) and (2). As a result, it is possible to improve the accuracy of identifying the detection target whether an adjacent group having the substantially equal distance is present or absent.

In S115, the CPU 132 increments the reference counter 1 for the three-dimensional object candidate region.

In S116, the CPU 132 determines whether or not the reference counter 1 is greater than the maximum number of the number of three-dimensional object candidate regions (the maximum value of the reference counter). When the reference counter 1 is not greater than the maximum number, it is determined that there is an unprocessed three-dimensional object candidate region, and the process proceeds to the process of S112. When the reference counter 1 is greater than the maximum number, the CPU 132 ends this process.

The second embodiment of the detection target candidate region enlarging means 3 has been described above. As in the first embodiment, when it is not possible to obtain a large amount of disparity, the assumed size width_l and height_l of the detection target is enlarged around the three-dimensional object candidate region. By vertically and horizontally enlarging the three-dimensional object candidate region, it is possible to cover the entire detection target regardless of the actual portion of the detection target, which corresponds to the three-dimensional object candidate region.

The embodiments of the object detection device according to the present invention have been described above.

Although the first embodiment and the second embodiment have been described as different examples, both may be implemented simultaneously. In other words, enlargement and grouping are performed at the stage of grouping by disparity to create the three-dimensional object candidate region according to the first embodiment, and then, when the region is smaller than the size of the detection target object, the region is appropriately enlarged by using the second example. According to the above form, it is possible to appropriately enlarge the detection target region to a size suitable for the identification process in the subsequent stage even for the three-dimensional object in a region where it is difficult to obtain the disparity.

The detection target candidate region enlarging means 3 may not be performed for all the three-dimensional object candidate regions, but may be performed only in a case of long distant where it is difficult to obtain an appropriate three-dimensional object region by grouping disparities. For example, in a case of a far place in which the distance Z is equal to or greater than a threshold value, the detection target candidate region enlarging means 3 (change unit) changes the size of the three-dimensional object candidate region (candidate region) to be equal to or greater than the image size (height_k, width_k) calculated by Expressions (1) and (2). By changing the size of the three-dimensional object candidate region only in the three-dimensional object candidate region (candidate region) corresponding to the far place where the disparity and distance errors are likely to occur, it is possible to reduce the process load of the detection target candidate region enlarging means 3 (change unit) and the detection target identifying means 4 (identification unit).

Note that, the present invention is not limited to the above examples, and various modifications may be provided. For example, the above examples are described in detail in order to explain the present invention in an easy-to-understand manner, and the above examples are not necessarily limited to a case including all the described configurations. Further, some components in one example can be replaced with the components in another example, and the configuration of another example can be added to the configuration of one example. Regarding some components in the examples, other components can be added, deleted, and replaced.

In the above examples, the function of the object detection device is realized by the CPU 132 of the microcom-

**EP 3 955 207 A1**

puter, but may be realized by a CPU or a circuit mounted on the stereo camera. The three-dimensional object candidate region extracting means 2 (extraction unit), the detection target candidate region enlarging means 3 (change unit), and the detection target identifying means 4 (identification unit) may be configured by a logic circuit such as a field-programmable gate array (FPGA). Thus, various functions can be realized as hardware using the logic circuit.

In the above examples, the detection target is a motorcycle or a person, but may be another object.

Some or all of the configurations, functions, and the like may be realized in hardware by being designed with an integrated circuit, for example. Further, the above-described respective components, functions, and the like may be realized by software by the processor interpreting and executing a program for realizing the respective functions. Information such as a program, a table, and a file, that realizes each function can be stored in a memory, a storage device such as a hard disk and a solid state drive (SSD), or a storing medium such as an IC card, an SD card, and a DVD.

Examples of the present invention may have the following aspects.

(1). An object detection device that identifies a specific object from an image, the object detection device including: image inputting means for inputting an image captured by a stereo camera; three-dimensional object candidate region extracting means for extracting a three-dimensional object candidate region from distance information on the image; detection target candidate region enlarging means for calculating an estimated detection target size on a screen from size information of a detection target and distance information of the three-dimensional object candidate region and enlarging the target candidate region; and detection target identifying means for determining a likelihood of the detection target from image information of the detection target candidate region.

(2). The object detection device described in (1), in which, when a distance of the three-dimensional object candidate region is smaller than a predetermined threshold value, a process of the detection target candidate enlarging means is skipped.

(3). The object detection device described in (1), in which, when there are other three-dimensional object candidate regions with a short distance around the three-dimensional object candidate region, the detection target candidate region enlarging means enlarges the three-dimensional object candidate regions by setting the other three-dimensional object candidate regions as one three-dimensional object candidate region.

(4). The object detection device described in (1), in which the detection target candidate region enlarging means sets each of four vertexes of a rectangle of the three-dimensional object candidate region as a start point, and sets a total region of four regions obtained by enlarging the rectangle to an assumed size of a detection target object on the image.

According to (1) to (4), even at a far place where the distance measurement accuracy is poor, it is possible to appropriately set the object candidate region, improve the performance of the identification process in the subsequent stage, and suppress the process load to be small.

Reference Signs List

| | |
|---|---|
| 1 | image inputting means |
| 2 | three-dimensional object candidate region extracting means |
| 3 | detection target candidate region enlarging means |
| 4 | detection target identifying means |
| 21 | image captured by stereo camera |
| 22 | disparity image |
| 31 | input image |
| 32 | disparity image |
| 33 | strip-shaped column |
| 34 | disparity histogram |
| 39 | motorcycle |
| 41 | input image |
| 42 | motorcycle |
| 43 | disparity image |
| 44 | strip-shaped column |
| 47 | disparity histogram |
| 103, 104 | detection target candidate region |
| 131 | microcomputer |
| 132 | CPU |
| 133 | memory |
| 134 | communication I/F |

**Claims**

1. An object detection device comprising:

an extraction unit that extracts a candidate region indicating a region in which an object is present, from an image by performing grouping by a disparity associated with a pixel or a distance corresponding to the disparity; a change unit that calculates an actual size of a detection target and an image size indicating a size of the detection target on the image when the detection target is assumed to be at the distance, from the distance, and changes a size of the candidate region to be equal to or greater than the image size; and an identification unit that identifies whether the object in the candidate region having the changed size is the detection target.

2. The object detection device according to claim 1, wherein

the change unit widens a range of the disparity or the distance in grouping until the size of the candidate region is greater than the image size, and causes the extraction unit to re-extract the candidate region, and the identification unit identifies whether the object in the re-extracted candidate region is the detection target.

3. The object detection device according to claim 1, wherein

the change unit changes the size of the candidate region so that a horizontal width of the candidate region increases by a difference between a horizontal width of the image size and the horizontal width of the candidate region in each of a positive direction and a negative direction of a horizontal axis of the image, and changes the size of the candidate region so that a vertical width of the candidate region increases by a difference between a vertical width of the image size and the vertical width of the candidate region in each of a positive direction and a negative direction of a vertical axis of the image.

4. The object detection device according to claim 1, wherein the change unit changes the size of the candidate region to be equal to or greater than the image size when the distance is a long distance that is equal to or greater than a threshold value.

5. The object detection device according to claim 1, wherein

the pixel, and the disparity or the distance corresponding to the disparity are stored in a memory in association with each other, and the extraction unit, the change unit, and the identification unit are configured by a processor.

6. The object detection device according to claim 1, wherein

the pixel, and the disparity or the distance corresponding to the disparity are stored in a memory in association with each other, and the extraction unit, the change unit, and the identification unit are configured by a logic circuit.

7. The object detection device according to claim 1, wherein the detection target is a motorcycle or a person.

# FIG. 1

IMAGE INPUT MEANS
(INPUT UNIT)  1

THREE-DIMENSIONAL
OBJECT CANDIDATE
REGION EXTRACTING MEANS
(EXTRACTING UNIT)  2

DETECTION TARGET CANDIDATE
REGION ENLARGING MEANS
(CHANGING UNIT)  3

DETECTION TARGET
IDENTIFYING MEANS
(IDENTIFYING UNIT)  4

# FIG. 2

# FIG. 3

# FIG. 4

# FIG. 5

(THREE-DIMENSIONAL OBJECT CANDIDATE REGION EXTRACTION)

START

COLUMN i = 0 — S51

CREATE DISPARITY HISTOGRAM FOR
COLUMN i AND ACQUIRE PEAK DISPARITY VALUE — S52

ACQUIRE AND GROUP PEAK DISPARITY
RANGES (xs, ys) AND (xe, ye) — S53

IS GROUP REGION
BEING IN CONTACT WITH GROUP
IN COLUMN i PROVIDED
IN COLUMN (i-1)? — S54

no

yes

UPDATE GROUP REGION — S55

i > MAXIMUM VALUE
FOR NUMBER OF COLUMNS? — S56

no

i++ — S57

yes

END

# FIG. 6

# FIG. 7

x COORDINATE

Y COORDINATE

COLUMN 0    COLUMN 1    COLUMN 2

# FIG. 8

(DETECTION TARGET CANDIDATE REGION ENLARGEMENT)

START

GROUP k=0 — S81

ACQUIRE DISPARITY OF GROUP k — S82

CALCULATE width_k AND height_k BEING SIZE OF TARGET ON IMAGE FROM DISPARITY — S83

WIDTH OF GROUP k < width_k || HEIGHT < height_k? — S84

yes → UPDATE THRESHOLD VALUE OF GROUPED DISPARITY VALUE — S85

EXECUTE THREE-DIMENSIONAL OBJECT CANDIDATE REGION EXTRACTION PROCESS FOR GROUP k — S86

no → k++ — S87

k > MAXIMUM VALUE FOR NUMBER OF GROUPS? — S88

no

yes → END

# FIG. 9

x COORDINATE

# FIG. 10

## FIG. 11

```
              ┌─────────┐
              │  START  │
              └────┬────┘
                   │
   ┌───────────────▼────────────────┐
   │   THREE-DIMENSIONAL OBJECT      │   S111
   │   CANDIDATE REGION l=0          │
   └───────────────┬────────────────┘
                   │
   ┌───────────────▼────────────────┐
   │ ACQUIRE DISPARITY OF THREE-     │   S112
   │ DIMENSIONAL OBJECT CANDIDATE    │
   │ REGION l                        │
   └───────────────┬────────────────┘
                   │
   ┌───────────────▼────────────────┐
   │ CALCULATE width_l AND height_l  │   S113
   │ BEING SIZE OF TARGET ON IMAGE   │
   │ FROM DISPARITY                  │
   └───────────────┬────────────────┘
                   │
   ┌───────────────▼────────────────┐
   │ ENLARGE THREE-DIMENSIONAL       │   S114
   │ OBJECT CANDIDATE REGION WITH    │
   │ height_l UP AND DOWN, AND       │
   │ width_l LEFT AND RIGHT          │
   └───────────────┬────────────────┘
                   │
              ┌────▼────┐
              │   l++   │                 S115
              └────┬────┘
                   │
              ┌────▼────┐
  no         ╱           ╲               S116
 ◄─────────╱  l>MAXIMUM    ╲
          ╱   VALUE FOR      ╲
          ╲  NUMBER OF       ╱
           ╲ THREE-DIMENSIONAL╱
            ╲OBJECT CANDIDATE╱
             ╲ REGIONS?     ╱
              └────┬────┘
                   │ yes
              ┌────▼────┐
              │   END   │
              └─────────┘
```

# FIG. 12

121

122

126    128

123

127    129

124  height_l

125 width_l

121

125 125    12a

128    ΔH

126

124    124

127    129

124    124    ΔH

125    125

ΔW    ΔW

22

# FIG. 13

## INTERNATIONAL SEARCH REPORT

| International application No. |
|---|
| PCT/JP2020/012874 |

A. CLASSIFICATION OF SUBJECT MATTER
G06T 7/00(2017.01)i
FI: G06T7/00 650B
According to International Patent Classification (IPC) or to both national classification and IPC

B. FIELDS SEARCHED

Minimum documentation searched (classification system followed by classification symbols)
G06T7/00

Documentation searched other than minimum documentation to the extent that such documents are included in the fields searched
Published examined utility model applications of Japan       1922–1996
Published unexamined utility model applications of Japan     1971–2020
Registered utility model specifications of Japan             1996–2020
Published registered utility model applications of Japan     1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-224918 A (FUJI HEAVY INDUSTRIES LTD.) 07.10.2010 (2010-10-07) paragraphs [0063]-[0221], fig. 1 | 1, 7 |
| Y | paragraphs [0063]-[0221], fig. 1 | 2-6 |
| Y | JP 2010-224936 A (FUJI HEAVY INDUSTRIES LTD.) 07.10.2010 (2010-10-07) paragraphs [0116]-[0118], [0125] | 2 |
| Y | JP 2014-44730 A (CLARION CO., LTD.) 13.03.2014 (2014-03-13) paragraphs [0049]-[0050] | 3 |
| Y | JP 2018-92604 A (RICOH CO., LTD.) 14.06.2018 (2018-06-14) paragraphs [0031], [0186]-[0188] | 4-6 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 July 2020 (03.07.2020) | 14 July 2020 (14.07.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

24

**INTERNATIONAL SEARCH REPORT**
Information on patent family members

International application No.

PCT/JP2020/012874

| Patent Documents referred in the Report | Publication Date | Patent Family | Publication Date |
|---|---|---|---|
| JP 2010-224918 A | 07 Oct. 2010 | (Family: none) | |
| JP 2010-224936 A | 07 Oct. 2010 | (Family: none) | |
| JP 2014-44730 A | 13 Mar. 2014 | (Family: none) | |
| JP 2018-92604 A | 14 Jun. 2018 | WO 2018/097269 A1 paragraphs [0031], [0186]-[0188] EP 3545464 A1 CN 109997148 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016206801 A